# EUROPÄISCHE PATENTANMELDUNG

(11) **EP 4 800 551 A1**
(43) Veröffentlichungstag der Anmeldung: **02.09.2026**
(21) Anmeldenummer: 25161152.1
(22) Anmeldetag: 28.02.2025
(51) Int. Cl.: G06F 9/48, G06F 15/17

(54) **EINHEIT, SYSTEM UND VERFAHREN ZUM STEUERN ZUMINDEST EINER CPU EINER ANZAHL VON CPUS**

(71) Anmelder: vir-fair GmbH, 13437 Berlin (DE)
(72) Erfinder: Mahltig, Holger, 13437 Berlin (DE)
(74) Vertreter: 2s-ip Schramm Schneider Bertagnoll Patent- und Rechtsanwälte Part mbB

(57) **Zusammenfassung**

Einheit und Erfahren zum Steuern zumindest einer CPU einer Anzahl von CPUs, aufweisend: Mittel zum Lesen von Speicherzugriffsinformation, die über ein Bussystem zwischen einer ihr zugeordneten weiteren CPU der Anzahl von CPUs und einem Speicher ausgetauscht wird, Mittel zum Durchführen eines Vergleichs der Speicherzugriffsinformation mit Referenzinformation daraufhin, ob eine vorbestimmte Bedingung erfüllt ist, Mittel zum Auslösen zumindest eines Signals für die zumindest eine CPU, sofern der Vergleich ergibt, dass die vorbestimmte Bedingung erfüllt ist.

## Beschreibung

Die Erfindung betrifft eine Einheit, ein System und ein Verfahren zum Steuern zumindest einer CPU einer Anzahl von CPUs.

Der Datentransfer zwischen dem Arbeitsspeicher ("main memory") und dem Prozessor trägt wesentlich zur Ausführungszeit ("execution time") und dem Energieverbrauch bei. Dieser Flaschenhals des Datentransfers ("bottleneck") kann abgemildert werden, indem man eine Technik verwendet, die "Processing-in-Memory" (PiM) genannt wird. Eine Kategorie von PiM ist das sogenannte "Processing-u-sing-Memory" (PuM), bei den Berechnungen im Speicherarray selbst erfolgen, indem dafür die im Arbeitsspeicher ablaufenden analogen Vorgänge und Eigenschaften ausgenutzt werden.

Die weiterhin am häufigsten verwendete Prozessorarchitektur (in CPUs) basiert auf der von-Neumann-Architektur, welche eine große Flexibilität in der Kontrolle des Programmflusses, d.h. der Abfolge von Instruktionen, ermöglicht. Damit einher aber geht gleichzeitig eine stark sequentielle Abarbeitung der Rechenschritte; dies wirkt sich zwangsläufig auf die Ausführungsgeschwindigkeit aus. Demgegenüber hat sich gerade für rechenaufwändige Aufgaben wie z.B. im Bereich der künstlichen Intelligenz oder in komplexen Simulationen die Nutzung der Architektur von Grafikkarten etabliert (GPUs), die in hohem Maße aus parallelen Einheiten bestehen und damit das Problem der sequentiellen Abarbeitung umgehen. Die Möglichkeiten der Kontrolle des Programmflusses ist in dieser parallelen Architektur jedoch sehr begrenzt.

Die Aufgabe der Erfindung besteht also darin, eine Einheit, ein System und ein Verfahren zu finden, welches die Vorteile von Geschwindigkeit und Energieeffizienz wie in parallelen Architekturen oder in PiM mit einer höheren Kontrolle des Programmflusses der von-Neumann-Architektur kombiniert.

Diese Aufgabe wird durch eine Einheit, ein System und ein Verfahren gemäß den unabhängigen Ansprüchen gelöst. Vorteilhafte Ausführungsformen der Erfindung sind in den abhängigen Ansprüchen definiert.

Bereitgestellt wird demnach eine Einheit zum Steuern zumindest einer CPU einer Anzahl von CPUs, aufweisend:
Mittel zum Lesen von Speicherzugriffsinformation, die über ein Bussystem zwischen einer ihr zugeordneten weiteren CPU der Anzahl von CPUs und einem Speicher ausgetauscht wird,
Mittel zum Durchführen eines Vergleichs der Speicherzugriffsinformation mit Referenzinformation daraufhin, ob eine vorbestimmte Bedingung erfüllt ist,
Mittel zum Auslösen zumindest eines Signals für die zumindest eine CPU, sofern der Vergleich ergibt, dass die vorbestimmte Bedingung erfüllt ist.

Das zumindest eine Signal kann zumindest einen Interrupt aufweisen.

Die Speicherzugriffsinformation können Daten betreffend den Zugriff auf eine Speicherstelle eines Arbeitsspeichers bezeichnen, insbesondere Adresse einer Speicherstelle, Daten spezifizierend Zugriffsart und/oder Daten der oder für die Speicherstelle.

Hierbei kann die vorbestimmte Bedingung entweder Identität oder Teilidentität sein.

Die Einheit kann weiter aufweisen:
eine Speichervorrichtung zum Speichern der Referenzinformation,
wobei die Speichervorrichtung insbesondere exklusiv für die Einheit bestimmt ist.

Die Einheit kann weiter aufweisen:
Mittel zum Entscheiden, für welche der zumindest einen CPU das zumindest eine Signal vorgesehen ist.

Ferner kann eine Mehrzahl von Interrupts vorgesehen sein und die Einheit kann weiter aufweisen: Mittel zum Bestimmen des Interrupt aus der Mehrzahl von Interrupts, und Veranlassen, dass die zumindest eine erste CPU den bestimmten Interrupt ausführt.

Hierbei kann zumindest ein Interrupt umfassen, dass die zumindest eine weitere CPU an eine vorbestimmte Programmstelle in einem Programmcode der zumindest einen CPU springt.

Die Einheit kann weiter aufweisen:
eine Anzahl erster Logikgatter zur bitweisen XNOR-Verknüpfung der Referenzinformation mit der Speicherzugriffsinformation, wobei jedes erste Logikgatter an seinem Ausgang einen jeweiligen Pegelwert entsprechend der XNOR-Verknüpfung bereitstellen kann, und
ein zweites Logikgatter zur AND-Verknüpfung der Ausgänge der Anzahl erster Logikgatter, wobei das zweite Logikgatter an seinem Ausgang einen jeweiligen Pegelwert entsprechend der AND-Verknüpfung bereitstellen kann,
wobei der Pegelwert am Ausgang des zweiten Logikgatters (AND) zum Auslösen des Signals, insbesondere des Interrupt, verwendbar ist.

Die Einheit kann weiter aufweisen:
Eine Anzahl dritter Logikgatter, deren jedes zwischen dem Ausgang eines ersten Logikgatters und einem Eingang des zweiten Logikgatters angeordnet ist, zur OR-Verknüpfung des Pegelwerts des Ausgangs eines ersten Logikgatters mit einem Pegelwert, der einem Bit einer zugeordneten Speicherstelle entspricht, wobei das Bit angibt, ob der Pegelwert des Aus-gangs des ersten Logikgatters beim Vergleich zu berücksichtigen ist.

Die Erfindung umfasst auch ein System zum Beeinflussen einer Anzahl von CPUs, die zur parallelen Abarbeitung von Programmcode eine Kopplung miteinander aufweisen, aufweisend
eine Anzahl von erfindungsgemäßen Einheiten wie oben definiert,
wobei jede CPU der Anzahl von CPUs und jeweils eine andere der Einheiten einander zugeordnet sind,
wobei die Kopplung der CPUs durch Kopplung der Einheiten miteinander unterstützt ist,
wobei die Mittel zum Auslösen zumindest eines Signals einer jeden Einheit zusätzlich ausgestaltet sind, ein Signal an die ihr zugeordnete CPU zu richten, und weitere Signale über die Kopplung an alle weiteren CPUs zu richten, und über die Kopplung ein Signal zu empfangen, welches von einer anderen Einheit an die ihr zugeordnete CPU gerichtet ist, und auf der Basis des empfangenen Signals ein Signal für die ihr zugeordnete CPU auszulösen.

Ferner umfasst die Erfindung ein Verfahren zum Steuern zumindest einer CPU einer Anzahl von CPUs, aufweisend die Schritte:
Lesen von Speicherzugriffsinformation, die über ein Bussystem zwischen einer ihr zugeordneten weiteren CPU der Anzahl von CPUs und einem Speicher ausgetauscht wird,
Durchführen eines Vergleichs der Speicherzugriffsinformation mit Referenzinformation daraufhin, ob eine vorbestimmte Bedingung erfüllt ist,
Auslösen zumindest eines Signals für die zumindest eine CPU, sofern der Vergleich ergibt, dass die vorbestimmte Bedingung erfüllt ist.

Hierbei kann das zumindest eine Signal zumindest einen Interrupt aufweisen und/oder kann die Speicherzugriffsinformation Daten betreffend den Zugriff auf eine Speicherstelle eines Arbeitsspeichers bezeichnen, insbesondere Adresse einer Speicherstelle, Daten spezifizierend Zugriffsart und/oder Daten der oder für die Speicherstelle

Hierbei kann die vorbestimmte Bedingung entweder Identität oder Teilidentität sein.

Ferner umfasst die Erfindung ein Verfahren zum Beeinflussen einer Anzahl von CPUs, die zur parallelen Abarbeitung von Programmcode eine Kopplung miteinander aufweisen,
das Verfahren aufweisend;
Ausführen des Verfahrens wie oben beschrieben für jede weitere CPU der Anzahl der CPUs,
wobei das Auslösen zumindest eines Signals zusätzlich umfasst, ein Signal an die jeweilige weitere CPU zu richten, und Signale über die Kopplung an alle übrigen CPUs zu richten, und über die Kopplung ein Signal zu empfangen, welches an die jeweilige weitere CPU gerichtet ist, und auf der Basis des empfangenen Signals ein Signal für die weitere CPU auszulösen.

Ferner umfasst die Erfindung auch Programmcode, der, wenn in eine Datenverarbeitungseinrichtung geladen, diese so steuert, dass sie die erfindungsgemäßen Verfahren ausführt.

Des Weiteren umfasst die Erfindung auch einen Datenträger mit dem Programmcode wie oben beschrieben.

Die Erfindung und Ausführungsformen der Erfindung werden anhand der Zeichnung näher beschrieben. Hierin zeigt:
- Fig. 1: eine von-Neumann-Architektur mit der Steuereinheit gemäß einer Ausführungsform der Erfindung,
- Fig. 2: ein System gemäß einer Ausführungsform der Erfindung
- Fig. 3: eine Steuereinheit mit XNOR-Gattern gemäß einer Ausführungsform der Erfindung,
- Fig. 4: eine Steuereinheit mit XNOR-Gattern und OR-Gattern gemäß einer Ausführungsform der Erfindung,
- Fig. 5: eine DRAM-Matrix,
- Fig. 6: eine DRAM-Bank,
- Fig. 7: eine Detailansicht DRAM-Matrix,
- Fig. 8: eine "Triple Row Activation",
- Fig. 9: ein "Bitwise NOT" und
- Fig. 10: ein Schema eines DRAM-Speichers in Produktion.

Unter Arbeitsspeicher werden hier Speichervorrichtungen verstanden, in denen eine CPU den Code und die Daten zur häufigen Verwendung - "während ihrer Arbeit" - findet. Im Folgenden soll diese Definition verwendet werden, gleichgültig der verwendeten Speichereigenschaften wie z.B. flüchtig oder nicht flüchtig. Als charakterisierendes Kennzeichen des Arbeitsspeichers wird dabei die Sichtweise der jeweiligen CPU eingenommen.

Im embedded-Bereich ist es inzwischen häufig anzutreffen, dass Speicher, der über eine relativ schnelle SPI-Schnittstelle verfügt, in den verfügbaren Arbeitsspeicher hineingemappt wird. Dies auch dann, wenn es sich bei dem per SPI angeschlossenen Speicher um einen nicht-flüchtigen Speicher wie z.B. Flash-Speicher handelt.

Selbst bei der hardwareseitigen Verwendung von flüchtigem Speicher, z.B. DRAM, gibt es typische Rechnerbauformen, bei denen Arbeitsspeicherbereiche als schreibgeschützt, also mit Eigenschaften eines ROM versehen werden.

Die Erfindung beschreibt also ein Konzept, bei dem mehrere ansonsten unabhängig und parallel arbeitende CPU unter bestimmten Bedingungen gesteuert werden. Diese erfolgt über eine oder mehrere erfindungsgemäße Steuereinheiten.

Da es auch erfindungsgemäße Ausführungsformen von Steuereinheiten gibt, die über eine eigene CPU zur internen Steuerung verfügen, soll im Folgenden zwischen einer CPU außerhalb einer Steuereinheit und innerhalb einer Steuereinheit unterschieden werden.

Zur Vermeidung von Verwechslungen wird bei einer internen Verwendung meistens allgemein von Speichersteuerung gesprochen, weil der Speicher das zentrale Element einer Steuereinheit ist.

Eine Speichersteuerung kann dann auch eine CPU-gesteuerte Speichereinrichtung sein.

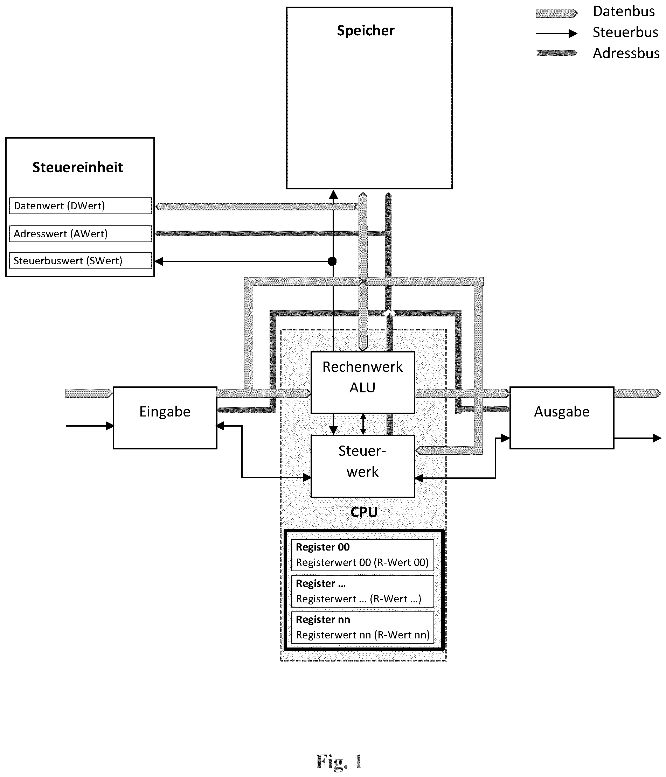

In einer Ausführungsform, wie in Fig. 1 gezeigt, liest die erfindungsgemäße Steuereinheit den Speicherzugriff der CPU über den Adress-, Steuer- und Datenbus mit (Speicherzugriffsinformation). Die Steuereinheit nutzt den Umstand, dass der Programmierer selbst bzw. der von ihm verwendete Compiler explizit festlegen kann, wo im Speicher welche Werte abgelegt werden. Diese Information erhält die Steuereinheit vom Programmierer bzw. automatisiert vom Compiler gleichfalls.

Das parallele Mitlesen des Speicherzugriffs durch die Steuereinheit hat keine negative Auswirkung auf die Geschwindigkeit der CPU, da die Vergleichsschaltung auf einfachen Schaltungen wie z.B. XNOR-Gatter beruht.

Mithilfe eigener Vergleichseinrichtungen überprüft die Steuereinheit jeden Speicherzugriff auf bestimmte Wertkombinationen aus Adresswert, Datenwert und Steuerwert - Bedingungen genannt - um dann bei Übereinstimmung, also erfüllter Bedingung, eine Aktion auszulösen. Eine jede Bedingung wie auch die jeweilige Aktion bei Erfüllung dieser Bedingung ist programmierbar. Eine Aktion ist typischerweise mit dem Auslösen eines Interrupts verbunden. Der ausgelöste Interrupt weist die den Interrupt erhaltende weitere CPU an, die aktuelle Codeausführung zu unterbrechen und den Code des Interrupts auszuführen.

Der Interrupt wird über eine Interruptleitung übertragen. Es können mehrere Interruptleitungen für mehrere Interrupts vorgesehen sein. Die eine oder mehreren Interruptleitungen können Teil des Steuerbusses sein.

Ein solcher Sprung zu einem anderen Codeblock entspricht in seiner Wirkung dem bedingten Sprung eines von der CPU ausgeführten Befehls.

Die Sprungbedingung wird aber nicht wie im Stand der Technik von der CPU überprüft, sondern von der erfindungsgemäßen Steuereinheit.

In einer weiteren Ausführungsform liest die Steuereinheit nicht am Verbindungsbus zum Speicher mit, sondern liest die Register der CPU. Dies ist mit einer modifizierten CPU möglich, was entweder eine neue CPU-Herstellung erforderlich macht oder aber in einem FPGA mit Softcore-Prozessor möglich ist.

Der Vorteil dieser Ausführungsform ergibt sich aus den zusätzlichen Informationen, welche Werte in welche Register geladen wurden. Damit kann der Programmierer die Bedingungen der Steuereinheit noch genauer festlegen: Die Dokumentation des CPU-Herstellers liefert ihm die Bedeutung einer jeden erlaubten Registerwertkombination, aus denen er sich dann die für sein Programmierziel passenden Bedingungen heraussuchen kann.

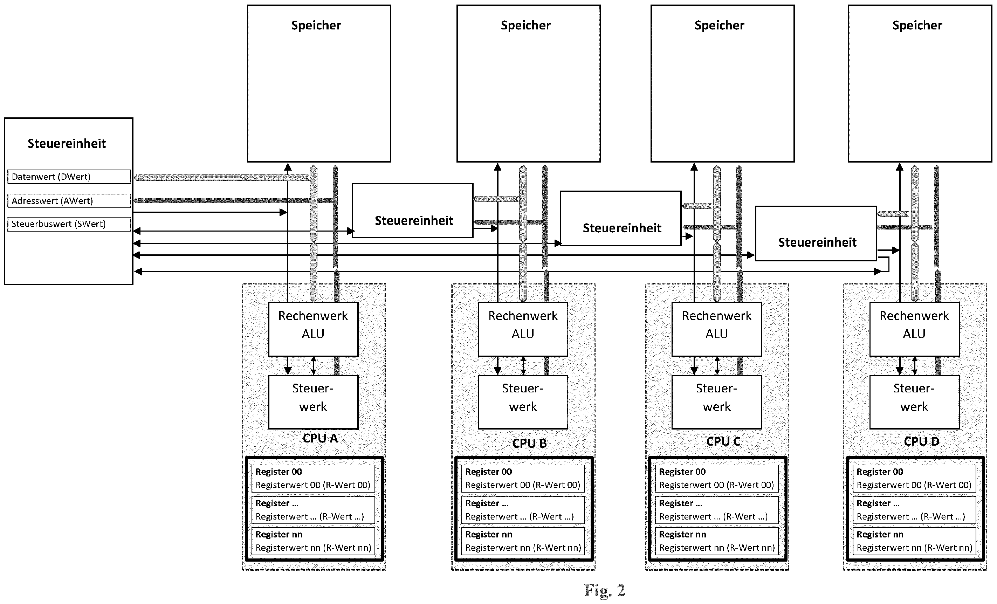

In einer weiteren Ausführungsform, die in Fig. 2 gezeigt ist, bei der mehrere CPUs zur parallelen Abarbeitung eingesetzt werden, sich aber steuern lassen sollen, ist jede dieser CPUs A-D jeweils einer andern Steuereinheit zugeordnet. Die Steuerung der mehreren CPUs erfolgt dann über die Kopplung der Steuereinheiten.

Eine erfüllte Bedingung in der Steuereinheit der CPU A löst dann beispielsweise einen Interrupt bei der ihr zugeordneten CPU A aus und in Folge jeweils eine Aktion bei den übrigen Steuereinheiten der CPUs B, C, D aus. Diese wiederum lösen jeweils bei ihren zugeordneten CPUs B, C, D einen Interrupt) aus.

Wenn beispielsweise eine aufwändige Volltextsuche auf mehreren parallelen CPUs durchgeführt wird und die Suche beim Finden des Suchbegriffes beendet werden soll, so schreibt die CPU A einen festgelegten Wert, z.B. FFFF an die Speicheradresse 1000 ihres Speichers und erfüllt damit eine Bedingung in der Steuereinheit A. Als Reaktion darauf löst die Steuereinheit A einen Interrupt bei ihrer CPU und eine Aktion jeweils in den Steuereinheiten der CPUs B, C, D aus, welche wiederum in ihrer jeweiligs zugeordneten CPU B, C, D einen Interrupt auslösen, z.B. den Abbruch der Suche.

In einer Ausführungsform ist der Speicher der Steuereinheit ein einfacher flüchtiger Registerspeicher.

In einer weiteren Ausführungsform ist der Speicher ein adressierbarer flüchtiger Speicher wie z.B. DRAM oder SRAM.

In einer weiteren Ausführungsform ist der Speicher ein adressierbarer nichtflüchtiger Speicher wie z.B. Flash.

In einer weiteren Ausführungsform ist der Speicher ein adressierbarer nichtflüchtiger, nicht programmierbarer Speicher wie z.B. ROM.

In einer Ausführungsform ist der Speicher der Steuereinheit von derselben CPU programmierbar, deren Speicherzugriffe die Steuereinheit überwacht.

In einer weiteren Ausführungsform ist der Speicher der Steuereinheit von einer eigenen CPU (Speichersteuerung) programmierbar. Diese CPU kann dann als Aktion auf eine erfüllte Bedingung eine oder mehrere Bedingungen in ihrem eigenen Speicher umprogrammieren.

In einer weiteren Ausführungsform ist der Speicher der Steuereinheit von einer gekoppelten CPU programmierbar.

In einer weiteren Ausführungsform ist der Speicher der Steuereinheit von einer Steuereinheit einer gekoppelten CPU programmierbar.

In einer weiteren Ausführungsform ist der Speicher der Steuereinheit von einer oder mehreren anderen Steuereinheiten programmierbar.

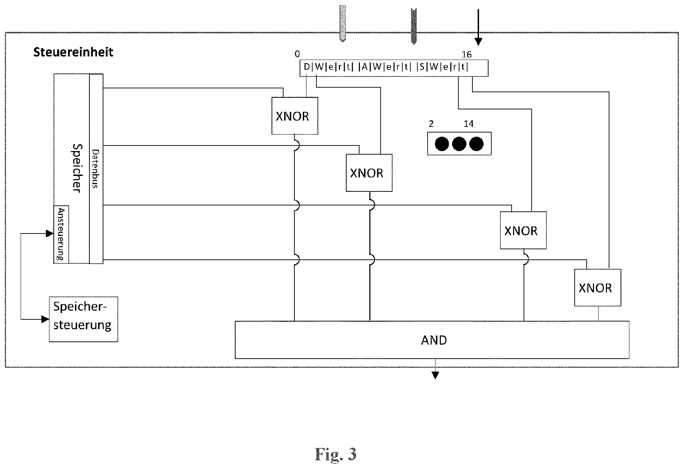

In einer Ausführungsform, vgl. Fig. 3, wird als Vergleichseinrichtung jeweils ein XNOR-Gatter verwendet, welches an seinem Ausgang eine logische 1 ausgibt, wenn beide Eingänge logisch 1 bzw. beide Eingänge logisch 0 sind. Damit gibt dieses Gatter eine logische 1 aus, wenn beide logische Pegel an den zwei Eingängen übereinstimmen.

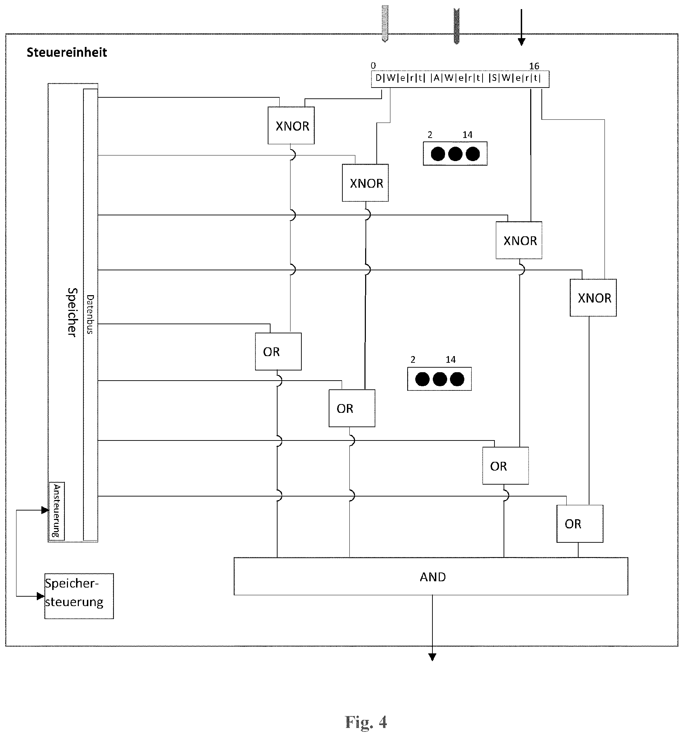

In Fig. 3 und 4 ist ein beispielhafter Wert mit 17 Bit Breite zu überprüfen. Jede einzelne Bitleitung ist als Kasten skizziert und mit einem symbolischen Inhalt versehen, der "DWert AWert SWert" ergibt. In der technischen Umsetzung in einem typischen digitalen System ist statt eines Zeichens eine logische 0 oder eine logische 1 auf den einzelnen Bitleitungen abzulesen.

Für jede Leitung des Adressbusses, des Datenbusses wie auch für die Read/Write-Leitung wird je ein XNOR-Gatter verwendet. Für ein beispielhaftes 32-Bit-System werden dann 32 XNOR-Gatter für den Adressbus, 32 XNOR-Gatter für den Datenbus und ein XNOR-Gatter für die Read/Write-Leitung benötigt und an einen Eingang des jeweiligen XNOR Gatters angeschlossen.

Jede weitere Steuerleitung, z.B. soweit vorhanden eine Taktleitung, erhält gleichfalls ein XNOR-Gatter als Vergleichseinrichtung.

An den jeweiligen zweiten Eingang wird jeweils ein logischer Referenzwert angelegt, der aus einem Speicherbaustein stammt. Damit sind auch 32 + 32 + 1 = 65 Bit für Referenzwerte erforderlich.

Die Pegel der 65 Ausgänge der XNOR-Gatter werden in einer Ausführungsform über ein Additionsschaltung zusammengeführt, beispielsweise über ein AND-Gatter mit 65 Eingängen. Am AND-Gatter liegt eine logische 1 an, wenn alle 65 Leitungen von der CPU zum Speicher mit den Vergleichswerten übereinstimmen. Genau dann wird eine bestimmte Speicherstelle, die für eine vom Programmierer festgelegte Variable steht, mit einem bestimmten Wert geschrieben bzw. ein bestimmter Wert aus der Speicherstelle gelesen.

In weiteren Ausführungsformen wird dieser Grundaufbau erweitert.

Es gibt auch andere Ausführungsformen der Vergleichseinrichtung, anstelle der XNOR-Gatter:
Ein Operationsverstärker verfügt über zwei Eingänge und einen Ausgang. Er lässt sich so schalten, dass die Spannungsdifferenz an den beiden Eingängen verstärkt am Ausgang ausgegeben wird. In bestimmten Anwendungsfällen lässt sich auch diese Schaltung bereits als Vergleichsschaltung verwenden. Gegebenenfalls ist noch Anpassungselektronik erforderlich, falls das folgende System digitale Pegel erwartet.

Eine weitere Ausführungsform einer Vergleichseinrichtung ist als sense amplifier.

Ein sense amplifier besteht aus zwei Operationsverstärkern in einer speziellen Verschaltung. Diese erlaubt es, einen geringe Spannungsdifferenz so zu verstärken, dass daraus ein für die Digitaltechnik verwendbarer Wert entsteht. Der sense amplifier hat weiterhin einen Sperreingang, mit dem der verstärkte, digitale Wert festgehalten werden kann.

Er findet sich insbesondere in DRAM und SRAM-Bausteinen wieder und wird im Stand der Technik zur Durchführung von AND-, NOT- und OR-Operationen verwendet.

Die vorliegende Erfindung verwendet diesen Stand der Technik in einer weiteren Ausführungsform der Steuereinheit mithilfe eines modifizierten Speicherbausteins.

In einer Ausführungsform löst eine erfüllte Bedingungskombination einen Interrupt einer weiteren CPU aus.

Die logische 1 am zusammenfassenden AND-Gatter wird dann in einer Ausführungsform von einer weiteren CPU über eine Interruptleitung erhalten und lässt diese CPU dann auf diese erfüllte Bedingungskombination hin - beispielsweise Schreibzugriff an Adresse XXX mit Wert YYY - dafür vorgesehenen Code ausführen.

Die logische 1 am zusammenfassenden AND-Gatter löst in einer weiteren Ausführungsform einen Interrupt gerade in der CPU aus, deren Busleitungen zu ihrem Speicher überwacht werden. Der in ihr ausgelöste Interrupt unterbricht die bisherige Programmausführung, d.h. den im Programm ausgeführten Zugriff auf den Arbeitsspeicher. Der Prozessor springt an die Adresse im Arbeitsspeicher, an der die Interruptroutine beginnt und führt diese aus.

Die logische 1 am zusammenfassenden AND-Gatter löst in einer weiteren Ausführungsform den Aktivierungseingang (enabled-Eingang) eines Speicherbausteins aus.

An den mehreren Ausgängen des Speicherbausteins sind einer oder mehrere Interruptleitungen einer oder mehrerer CPU angeschlossen. Die eine oder mehrere Interruptleitungen können Teil des Steuerbusses sein.

Wird der Aktivierungseingang des Speicherbausteins aktiviert, schaltet er vom hochohmigen Zustand um und gibt an seinen Ausgängen entsprechend des eingespeicherten Wertes eine logische 1 oder eine logische 0 aus. Auf diese Weise löst er die Interrupts aus, für die eine logische 1 programmiert wurde.

Seine Programmierung erhält er von seiner Speichersteuerung.

Es gibt Fälle, in denen der Programmierer im Speicher keinen einzelnen Wert an eine Speicherstelle schreiben will, sondern die Speicherstelle mit mehreren voneinander getrennt zu betrachtenden Werten belegen möchte. Dies ist z.B. bei einem 32-Bit tiefen Speicher der Fall, wenn an einer Speicherstelle zwei 16-Bit-Werte gespeichert werden sollen. In analoger Weise zur Verwendung der Speicherstelle seitens des Programmierers sind für die Erfindung einige Bits des Datenbusses für eine bestimmte Adresse irrelevant.

In einer Anwendungsform erfolgt die Maskierung eines Bits des Datenbusses durch ein zusätzliches OR-Gatter, welches zwischen der Vergleichsschaltung und der Additionsschaltung sitzt, vgl. Fig. 4. Eine logische 1 als Steuerbit des OR-Gatter sorgt für eine logische 1 am zugehörigen Eingang der Additionsschaltung, gleichgültig, ob die Vergleichsschaltung eine logische 1 für eine Übereinstimmung ausgibt oder nicht.

Für jede zu überwachende Datenbusleitung wird also ein XNOR- und ein OR-Gatter benötigt.

Es gibt Fälle, in denen der Programmierer mit Adressbereichen arbeitet und ihn beispielsweise nur interessiert, ob innerhalb dieses Adressbereiches nur 0 gespeichert ist: Eine Multiplikation mit einer Zelle dieses Adressbereiches - wie beispielsweise bei Matrizen - ergäbe wieder 0, Multiplikationen mit dieser Zelle brauchen daher nicht durchgeführt zu werden.

In einer Anwendungsform erfolgt die Maskierung eines Bits des Adressbusses auf dieselbe Weise wie bei dem Datenbus mithilfe eines eingefügten OR-Gatters.

Für jede zu überwachende Adressbusleitung wird also ein XNOR- und ein OR-Gatter benötigt.

Es gibt Fälle, in denen sowohl ein Schreib- als auch ein Lesezugriff behandelt werden soll. Damit sollen sowohl eine logische 0 wie auch eine logische 1 einen positiven Vergleich ergeben. In einer weiteren Ausführungsform wird die Schaltung mit einem zusätzlichen OR-Gatter zwischen Vergleichsschaltung und Additionsschaltung versehen.

Somit ist der erste Eingang des XNOR-Gatters mit einer Verbindungsleitung mit dem Speicher verbunden und erhält von dort den logischen Referenzwert für das erste Bit.

Stimmen die logischen Werte an den beiden Eingängen überein - ist diese Bedingung erfüllt -, so gibt das XNOR-Gatter an seinem Ausgang eine logische 1 aus.

Der Ausgang führt dann zum zweiten Eingang eines OR-Gatters.

Der erste Eingang des OR-Gatters ist mit einer Verbindungsleitung mit dem Speicher verbunden und erhält darüber sein Steuerbit, "Irrelevant-Bit" genannt.

Das OR-Gatter gibt an seinem Ausgang eine logische 1 aus - Bedingung erfüllt - wenn die Bedingungsprüfung des XNOR-Gatters erfüllt ist.

Das OR-Gatter gibt an seinem Ausgang aber auch eine logische 1 aus - Bedingung erfüllt -, wenn das Irrelevant-Bit logisch 1 ist.

Das Ergebnis der Bedingungsprüfung durch das XNOR-Gatter wird also als irrelevant behandelt, wenn das Irrelevant-Bit gesetzt ist.

Der Ausgang des OR-Gatters führt dann zu einem der Eingänge eines AND-Gatters.

Alle anderen 16 Bit des Beispiels durchlaufen denselben Schaltungsaufbau, aber mit jeweils eigenem XNOR- und OR-Gatter wie auch eigenen Leitungen zum Speicher.

Ergibt sich für alle beispielhaften 17 Bit die Bedingung als erfüllt, so gibt das AND-Gatter eine logische 1 an seinem Ausgang aus.

Das Ausgangssignal des AND-Gatters gibt für die zusammengefasste Prüfung des 17-Bit-Wertes am Eingang der Steuereinheit mit einer logischen 1 die Bedingung als erfüllt an.

Die beschriebenen Ausführungsformen sind nicht auf eine bestimmte Leitungsart beschränkt und werden ggf. auf weitere Leitungen, z.B. Steuer- und Taktleitungen erweitert.

Die bisher beschriebenen Ausführungsformen können nur eine Adress-, Daten-, Steuerwert-Kombination gleichzeitig überprüfen. In einer weiteren Ausführungsform wird für jede weitere gleichzeitig zu prüfende Kombination eine weitere Schaltungsgruppe nach einer der bisherigen Ausführungsformen parallel zur ersten geschaltet.

In den bisher beschriebenen Ausführungsformen wurde der Speicher der Steuereinheit aus Speicherbausteinen nach dem Stand der Technik gebildet. Im Folgenden wird ein modifizierter DRAM-Speicherbaustein beschrieben. In ihm werden sowohl die benötigte Speicherfunktionalität wie auch die benötigten Logikfunktionen des XNOR, OR und AND gebildet.

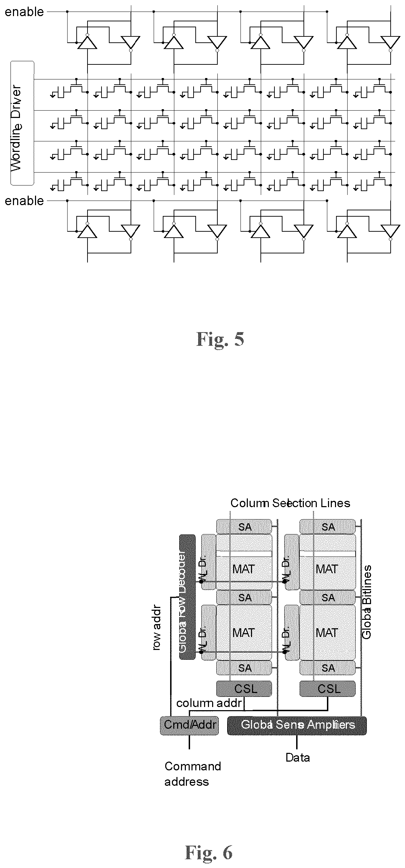

Ein typischer DRAM-Chip (Fig. 5 bis 7) besteht grob aus drei Kategorien:
1) Einem analogen Teil, bei dem für jedes zu speichernde Bit ein Kondensator als Speicherelement dient und ein Transistor den gespeicherten - analogen - Wert auf eine Leitung schaltet. Diese Leitung wird von mehreren so gebildeten Speichereinheiten (jeweils ein Kondensator und ein Transistor) gemeinsam genutzt. Die Leitung führt zum sogenannten sense amplifier.
2) Einer Reihe von bitweisen analog-digital-Wandlern und Verstärkern - den sogenannten sense amplifiern. Jeder sense amplifier ist für eine Reihe parallel angeordneter Speichereinheiten zuständig. Typisch sind 4096 (und mehr) parallele sense amplifier. Ein sense amplifier besteht aus zwei invertiert geschalteten Operationsverstärkern und führt damit im stabilen Zustand an einem Ende den invertierten Pegel des anderen Endes.
3) Einem digitalen Teil
   a) zur Steuerung des analogen Teils
   b) als Schnittstelle nach außen, z.B. zu einer CPU
   c) zur automatischen Ansteuerung der Speichereinheiten, um die Ladung des Kondensators wieder aufzufrischen. Dies wird z.B. durch einen Zähler implementiert.

Typischerweise sind die Speichereinheiten in einer Matrix angeordnet (Speichermatrix). Dabei sind die Speichereinheiten jeweils einer einzelnen Reihe mit einer jeweils einen einzigen Reihen-Steuerleitung verbunden. Damit selektiert jeweils eine Reihen-Steuerleitung die komplette Reihe.

Pro Spalte wiederum gibt es einen sense amplifier. Die gleichzeitig aktivierten Steuereinheiten einer Reihe geben ihren gespeicherten (analogen) Wert an den jeweils der Spalte zugeordneten sense amplifier weiter.

Diese Anordnung bewirkt, dass mit einer selektierten Reihe von Speichereinheiten nach Stabilisierung der sense amplifier alle Spaltenwerte parallel zur Verfügung stehen - typisch sind 4096; höhere Werte sind leicht realisierbar.

Mehrere solcher Matrizen von Speichereinheiten und sense amplifiern können dann je nach zu realisierenden Speicherparametern in größere Einheiten zusammengefasst oder auch parallel zueinander angeordnet sein.

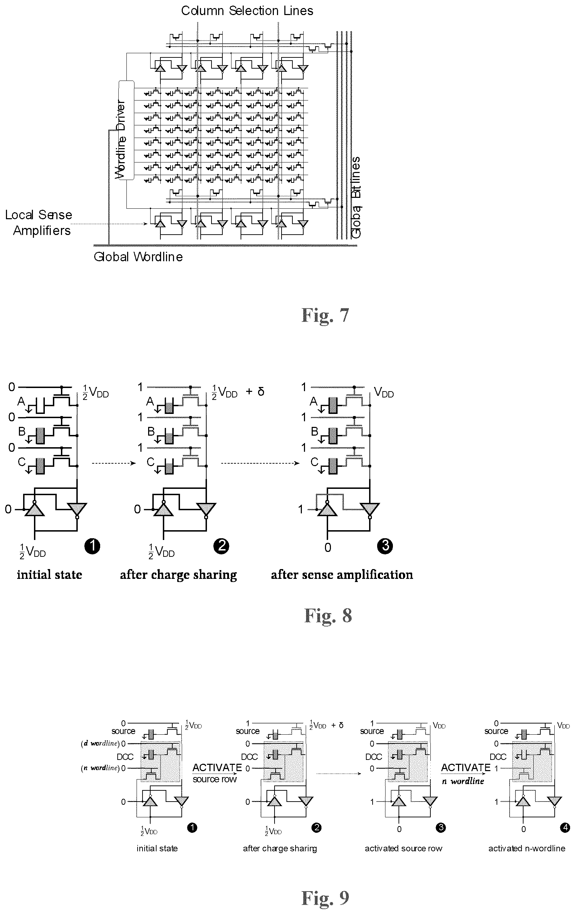

Fig. 7 bis Fig. 9 Das prior art Dokument von Onur Mutlu zeigt eine Möglichkeit, wie mithilfe einer besonderen Ansteuerreihenfolge, die vom typischen DRAM-Gebrauch abweicht, im analogen Teil des DRAM ein bitweises AND oder OR durchgeführt werden kann. Da dies entsprechend der beschriebenen Hardwarearchitektur reihenweise geschieht, kann ein bitweises AND bzw. OR über die Anzahl der sense amplifier parallel durchgeführt werden. Diese Parallelität und der Umstand, dass diese Operation nicht in der CPU sequentiell durchgeführt wird, ergibt bereits einen deutlichen Geschwindigkeitsvorteil. Auch der Speicherzugriff selbst, d.h. der zeitliche "Flaschenhals" des DRAM-Zugriffs seitens der CPU, entfällt, da die logische Operation im DRAM-Chip selbst stattfindet.

Weiterhin zeigt das prior art Dokument einen modifizierten DRAM-Chip, bei dem das an den sense amplifiern gleichfalls anliegende invertierte Signal gebildet und gespeichert wird. Dies wird mithilfe eines zusätzlichen Transistors pro Speichereinheit realisiert.

Da bei der Anwendung dieser Methode die ursprünglichen Werte überschrieben werden, sieht Mutlu die für seine Operationen notwendigen extra Speicherreihen vor - das sind 3 für AND bzw. OR.

Die CPU ist bei Mutlu weiterhin die zentrale Steuereinheit, die vorgibt, für welche Speichereinheiten eine der logischen Operationen AND, OR oder NOT durchgeführt werden sollen. Die CPU ist auch für die Weiterverarbeitung der resultierenden Werte verantwortlich und führt dies in typischer Weise sequentiell mit Laden, Verarbeiten und Rückspeichern jedes einzelnen Wertes durch.

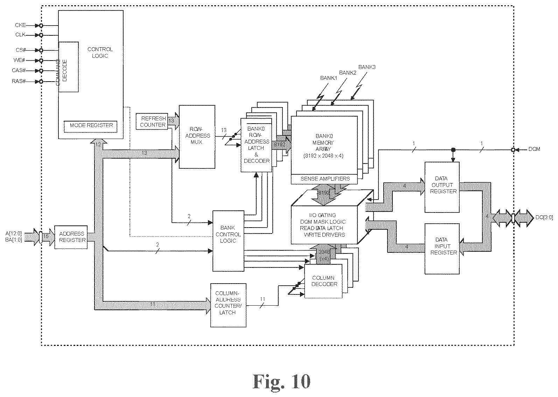

In der vorliegenden Erfindung können die Speichermatrizen im Gegensatz zum Stand der Technik gemäß Fig. 10 auch zeitlich versetzt angesteuert werden. Damit stehen an den sense amplifiern einer oder mehrerer Speichermatrizen bereits Werte stabil zur Verfügung, um Steuersignale für andere Speichermatrizen zur Verfügung zu stellen. Diese Steuersignale werden z.B. an die Steuerleitungen der zeitlich später angesteuerten Speichermatrizen gelegt. Damit steuern die ausgewählten Bitwerte aus einer Speichermatrix (z.B. Speichermatrix 0) die Auswahl der Bitwerte einer anderen Speichermatrix (z.B. Speichermatrix 1).

In einigen der bisher beschriebenen Ausführungsformen besteht eine erfindungsgemäße Steuereinheit pro zu vergleichendem Eingangsbit aus einem XNOR-Gatter, einem OR-Gatter und für die Zusammenfassung der Bedingungsprüfungen mehrerer Eingangsbits ein AND-Gatter.

Zur Steuerung erhalten die XNOR- und OR-Gatter jeweils einen Wert aus dem Speicher der Steuereinheit.

In der Ausführungsform eines modifizierten DRAM-Chips werden nun einige Speicherelemente ergänzt:
Für die Werte der Eingangsbits wird ein interner Speicher der Steuereinheit als Puffer hinzugefügt.

An den Eingängen der OR-Gatter wird gleichfalls ein Speicherpuffer hinzugefügt.

An den Eingängen des AND-Gatters wird gleichfalls ein Speicherpuffer hinzugefügt.

Für das Ausgangssignal des AND-Gatters wird gleichfalls ein Speicherpuffer hinzugefügt.

Mit diesen Speicherplatzerweiterungen liegen nun alle Steuerwertbits, Eingangswertbits, Zwischenwertbits und das Ausgangsbit in einem Speicher.

Ordnet man diese Werte zeilen- und spaltenweise und auf mehrere Speichermatrizen so an, dass sie zu den Logikoperationen von Mutlu passen, kann die Funktionalität einer Steuereinheit mit Gatter und Speicher ausschließlich in Speicherhardware durchgeführt werden.

Eine wesentliche Voraussetzung für die erfindungsgemäße Funktion einer Steuereinheit ist die Kenntnis, welche Speicheradressen die von ihr benötigten Speicherzugriffsinformation zur Durchführung der Bedingungsprüfung enthalten.

Auch wenn praktisch alle gängigen Programmiersprachen Routinen zur Speicherverwaltung mitbringen, erwartet jede CPU für die Ausführung eines Speicherzugriffs die explizite Angabe einer Speicheradresse. In Programmierumgebungen ist es typischerweise der Linker als Programm, welches die Festlegung von Speicherbereichen und ggf. Speicheradressen vornimmt.

Bei memory-mapped devices sind bestimmte Adressen als Schnittstelle zu an der CPU angeschlossener Hardware zu verwenden: sie lassen sich aber wie Speicheradressen ansprechen. Während dort die Festlegung von Adressen gängig ist, ist dies bei Arbeitsspeicher unüblich. Das liegt daran, dass für den Programmierer jede Speicherstelle gleichwertig ist. Hingegen ist es üblich, für einen String wie auch für ein Array einen Zeiger auf die Anfangsadresse zu verwenden und von dort aus die Folgeadressen der nächsten Elemente zu berechnen.

Bei Ausführungsformen von Steuereinheiten, die am Verbindungsbus zwischen CPU und Arbeitsspeicher mitlesen, wird also auf eine übliche Herangehensweise der hardwarenahen Programmierung zurückgegriffen, um die Festlegung der für die Steuereinheit zu prüfenden Adressen zu erreichen.

Die Programmierung einer Steuereinheit folgt ähnlichen Überlegungen und Schritten wie bei der Erstellung eines Programmes für eine CPU.

Ein Computerprogramm besteht zum einen aus einer Vielzahl von sequentiellen Arbeitsschritten, die vom Programmierer angegeben und von der CPU ausgeführt werden. Diese Befehle (relevant für die Ausführungsform der Registerkopplung) und Speicherzugriffe (relevant für die Ausführungsform der Buskopplung) enthalten für Steuereinheiten keine Bedingungen, die zu einer Aktion von ihnen führen und erfordern damit auch keine Parametrisierung in der Steuereinheit.

Verwendet der Programmierer hingegen in einem üblichen Programm einen Befehl wie z.B. "if", ist dies ein Fall, der für die Programmierung einer Steuereinheit relevant sein kann.

Verwendet der Programmierer auf der CPU einen if-Befehl und ist bei Ausführung dieses Befehls die Bedingung erfüllt, unterbricht die CPU ihre bisherige sequentielle Befehlsabarbeitung, springt für die Programmausführung an die angegebene Adresse und führt von dort an diesen Code sequentiell aus.

Einen solchen Codewechsel führt die CPU auch bei Auslösung eines externen Interrupts aus.

Damit ist die von der CPU ausgeführte Aktion bei einem softwareseitigen Sprungbefehl und dem Interrupt getriggerten Sprungbefehl gleich (mögliche Unterschiede in den Feinheiten der Zwischenspeicherung von Registerinhalten sind je nach CPU einstellbar).

Inwieweit der Programmierer den Weg über einen CPU-Befehl oder über eine Steuereinheit wählt, hängt in großen Teilen von Überlegungen zu Multiprozessor- und Multitasking-Umgebungen ab: Ein CPU-Befehl zum Codewechsel erfolgt CPU-intern und ist für andere CPU für ein Steuern nicht nutzbar.

Der Steuereinheitsausgang des AND-Gatters hingegen steht als mögliches Eingangssignal für andere Steuereinheiten wie auch für andere CPU zur Interruptansteuerung zur Verfügung.

Die Steuereinheit benötigt für die XNOR-Gatter die Bitkombination, die sie zur

Bedingungsprüfung verwenden soll, d.h. die Bitkombination, die eine Aktion auslösen soll. Für eine Steuereinheit mit XNOR-Gattern und einem zusammenfassenden AND-Gatter ist dies der einzige einzustellende Parameter. Dabei ist zu beachten, dass eine Reihe von XNOR-Gattern pro betrachtete Zeiteinheit auf nur eine Bitkombination prüfen und reagieren kann. Sollen mehrere Bitkombinationen - also Bedingungen - geprüft werden, werden auch mehrere Steuereinheiten benötigt und zusammengeschaltet.

Es gibt Anwendungsfälle, bei denen zusammenhängende Daten- oder auch Adressbereiche eine Aktion auslösen sollen. In diesem Fall ist nicht für jede einzelne Adresse und jeden Datenwert eine Steuereinheit nötig. Stattdessen können einzelne Bits als irrelevant aus der Bedingungsprüfung herausgenommen werden (masking).

Für jedes zu maskierende Bit wird die zugehörige Steuerleitung auf logisch 1 gesetzt.

In einigen Ausführungsformen werden Speichersteuerungen zur Ansteuerung des internen Speichers einer Steuereinheit verwendet.

Eine mögliche Ausführungsform ist eine typische Microcontroller-, also CPU-Steuerung. Eine solche CPU-Steuerung kann je nach Ausführungsform und Zweck über Ein- und Ausgabegeräte verfügen, beispielsweise einen USB-Anschluss oder einen Anschluss für einen Massenspeicher wie eine SSD verfügen.

Eine weitere mögliche Ausführungsform ist ein einfacher programmierbarer Zähler.

Eine weitere mögliche Ausführungsform ist ein Schnittstellenbaustein für z.B. eine serielle Schnittstelle, die eine externe Programmierung ermöglicht.

Diese Aufzählung von Ausführungsformen einer Speichersteuerung ist beispielhaft zu verstehen.

## Patentansprüche

1. Einheit zum Steuern zumindest einer CPU einer Anzahl von CPUs, aufweisend:
Mittel zum Lesen von Speicherzugriffsinformation, die über ein Bussystem zwischen einer ihr zugeordneten weiteren CPU der Anzahl von CPUs und einem Speicher ausgetauscht wird,
Mittel zum Durchführen eines Vergleichs der Speicherzugriffsinformation mit Referenzinformation daraufhin, ob eine vorbestimmte Bedingung erfüllt ist,
Mittel zum Auslösen zumindest eines Signals für die zumindest eine CPU, sofern der Vergleich ergibt, dass die vorbestimmte Bedingung erfüllt ist.

2. Einheit nach einem der vorhergehenden Ansprüche, wobei das zumindest eine Signal zumindest einen Interrupt aufweist.

3. Einheit nach einem der vorhergehenden Ansprüche, wobei die Speicherzugriffsinformation Daten betreffend den Zugriff auf eine Speicherstelle eines Arbeitsspeichers bezeichnet, insbesondere Adresse einer Speicherstelle, Daten spezifizierend Zugriffsart und/oder Daten der oder für die Speicherstelle.

4. Einheit nach einem der vorhergehenden Ansprüche, wobei die vorbestimmte Bedingung entweder Identität oder Teilidentität ist.

5. Einheit nach einem der vorhergehenden Ansprüche, weiter aufweisend:
eine Speichervorrichtung zum Speichern der Referenzinformation,
wobei die Speichervorrichtung insbesondere exklusiv für die Einheit bestimmt ist.

6. Einheit nach einem der vorhergehenden Ansprüche, weiter aufweisend:
Mittel zum Entscheiden, für welche der zumindest einen CPU das zumindest eine Signal vorgesehen ist.

7. Einheit nach einem der vorhergehenden Ansprüche,
wobei eine Mehrzahl von Interrupts vorgesehen sind und wobei die Einheit weiter aufweist: Mittel zum Bestimmen des Interrupt aus der Mehrzahl von Interrupts, und Veranlassen, dass die zumindest eine erste CPU den bestimmten Interrupt ausführt.

8. Einheit nach dem vorhergehenden Anspruch,
wobei zumindest ein Interrupt umfasst, dass die zumindest eine CPU an eine vorbestimmte Programmstelle in einem Programmcode der zumindest einen CPU springt.

9. Einheit nach einem der vorhergehenden Ansprüche, weiter aufweisend:
eine Anzahl erster Logikgatter (XNOR) zur bitweisen XNOR-Verknüpfung der Referenzinformation mit der Speicherzugriffsinformation, wobei jedes erste Logikgatter an seinem Ausgang einen jeweiligen Pegelwert entsprechend der XNOR-Verknüpfung bereitstellen kann, und
ein zweites Logikgatter (AND) zur AND-Verknüpfung der Ausgänge der Anzahl erster Logikgatter, wobei das zweite Logikgatter (AND) an seinem Ausgang einen jeweiligen Pegelwert entsprechend der AND-Verknüpfung bereitstellen kann,
wobei der Pegelwert am Ausgang des zweiten Logikgatters (AND) zum Auslösen des Signals, insbesondere des Interrupt, verwendbar ist.

10. Einheit nach Anspruch 9, weiter aufweisend:
Eine Anzahl dritter Logikgatter (OR), deren jedes zwischen dem Ausgang eines ersten Logikgatters (XNOR) und einem Eingang des zweiten Logikgatters (AND) angeordnet ist, zur OR-Verknüpfung des Pegelwerts des Ausgangs eines ersten Logikgatters (XNOR) mit einem Pegelwert, der einem Bit einer zugeordneten Speicherstelle entspricht, wobei das Bit angibt, ob der Pegelwert des Ausgangs des ersten Logikgatters (XNOR) beim Vergleich zu berücksichtigen ist.

11. System zum Beeinflussen einer Anzahl von CPUs, die zur parallelen Abarbeitung von Programmcode eine Kopplung miteinander aufweisen, aufweisend
eine Anzahl von Einheiten gemäß einem der vorherigen Ansprüche, wobei jede CPU der Anzahl von CPUs und jeweils eine andere der Einheiten einander zugeordnet sind,
wobei die Kopplung der CPUs durch Kopplung der Einheiten miteinander unterstützt ist,
wobei die Mittel zum Auslösen zumindest eines Signals einer jeden Einheit zusätzlich ausgestaltet sind,
ein Signal an die ihr zugeordnete CPU zu richten, und weitere Signale über die Kopplung an alle weiteren CPUs zu richten, und über die Kopplung ein Signal zu empfangen, welches von einer anderen Einheit an die ihr zugeordnete CPU gerichtet ist, und auf der Basis des empfangenen Signals ein Signal für die ihr zugeordnete CPU auszulösen.

12. Verfahren zum Steuern zumindest einer CPU einer Anzahl von CPUs, aufweisend die Schritte:
Lesen von Speicherzugriffsinformation, die über ein Bussystem zwischen einer weiteren CPU der Anzahl von CPUs und einem Speicher ausgetauscht wird,
Durchführen eines Vergleichs der Speicherzugriffsinformation mit Referenzinformation daraufhin, ob eine vorbestimmte Bedingung erfüllt ist,
Auslösen zumindest eines Signals für die zumindest eine CPU, sofern der Vergleich ergibt, dass die vorbestimmte Bedingung erfüllt ist.

13. Verfahren nach dem vorhergehenden Anspruch, wobei das zumindest eine Signal zumindest einen Interrupt aufweist und/oder wobei die Speicherzugriffsinformation Daten betreffend den Zugriff auf eine Speicherstelle eines Arbeitsspeichers bezeichnet, insbesondere Adresse einer Speicherstelle, Daten spezifizierend Zugriffsart und/oder Daten der oder für die Speicherstelle

14. Verfahren nach Anspruch 12 oder 13, wobei die vorbestimmte Bedingung entweder Identität oder Teilidentität ist.

15. Verfahren zum Beeinflussen einer Anzahl von CPUs, die zur parallelen Abarbeitung von Programmcode eine Kopplung miteinander aufweisen,
das Verfahren aufweisend
Ausführen des Verfahrens gemäß einem der Ansprüche 12-14 für jede weitere CPU der Anzahl der CPUs,
wobei das Auslösen zumindest eines Signals zusätzlich umfasst, ein Signal an die jeweilige weitere CPU zu richten, und Signale über die Kopplung an alle übrigen CPUs zu richten, und über die Kopplung ein Signal zu empfangen, welches an die jeweilige weitere CPU gerichtet ist, und auf der Basis des empfangenen Signals ein Signal für die weitere CPU auszulösen.
